# EUROPEAN PATENT APPLICATION

(11) **EP 1 783 160 A1**
(43) Date of publication of application: **09.05.2007**
(21) Application number: 05766196.9
(22) Date of filing: 13.07.2005
(51) Int. Cl.: C08J 7/06, C23C 18/16, C08L 101/00

(54) **PLATED RESIN MOLDING**

(30) Priority: 13.07.2004 JP 2004206082
(71) Applicant: Daicel Polymer Ltd., Tokyo 1088230 (JP); DAICEL CHEMICAL INDUSTRIES, LTD., Sakai-shi, Osaka (JP)
(72) Inventor: TAI, Toshihiro, Himeji-shi, Hyogo (JP); GU, Weihong c/o Daicel Chemical Industries, Ltd., Hyogo (JP); IZUMITANI,Tatsuo c/o Daicel Chem. Industries, Ltd., Hyogo (JP)
(74) Representative: Grünecker, Kinkeldey, Stockmair & Schwanhäusser Anwaltssozietät
(86) International application number: PCT/JP2005/013345
(87) International publication number: WO 2006/006735

(57) **Abstract**

The present invention provides a plated resin molded article that has a beautiful and strong plating layer. More particularly, it provides a plated resin molded article containing a resin molded article, the surface of which has not been subjected to a roughening treatment by chromic acid etching, and a metal plating layer formed on the surface of the resin molded article, the resin composition containing (A) 10 to 90 mass% matrix resin that has a water absorption (ISO62) after 24 hours in 23°C water of at least 0.6%, (B) 10 to 90 mass% styrenic resin that has a water absorption (ISO62) after 24 hours in 23°C water of less than 0.6%, (C) 0 to 40 mass% compatibilizer and (D) 1 to 20 parts by mass, to 100 parts by mass of the total of components (A) to (C), of a water-soluble substance that has a solubility (25°C) in water of 0.01 g/100 g to 10 g/100 g; wherein the plated resin molded article does not exhibit a change in appearance upon visual inspection after the prescribed heat cycle tests.

## Description

### Technical Field

The present invention relates to plated resin molded articles having a high plating strength.

### Background Arts

Resin molded articles such as an ABS resin and a poly amide resin have been used as automobile parts for the purpose of reducing the weight of an automobile, and plating such as copper or nickel is carried out on the resin molded articles in order to give a upscale image and a sense of beauty.

When the plating is carried out on resin molded articles such as an ABS resin, an etching step of roughing the surface of the resin molded articles is conventionally essential to enhance the adhering strength after the removal step of fat. For example, when an ABS resin molded article and a polypropylene molded article are plated, a bath of chromic acid (a mix solution of chromium (III) oxide and sulfuric acid) is used after the removal step of fat, and an etching treatment is required to be carried out at 65 to 70°C for 10 to 15 minutes. Accordingly, poisonous hexa-valent chromic acid ion is contained in waste water. Therefore, a treatment of neutrally precipitating after reducing the hexa-valent chromic acid ion to a tri-valent ion is essential, which creates problems in wastewater treatment.

Considering safety during a work at a spot and an influence to environment due to waste water thus, it is desirable not to carry out an etching treatment using the chromium bath, but in that case, there is a problem that the adhering strength of a plating layer to a molded article which is obtained by an ABS resin and the like cannot be enhanced.

JP A 2003-82138 and JP A 2003-166067 disclose beautiful appealing, high-plating-strength plated resin molded articles that are obtained without carrying out an etching treatment with chromic acid and also disclose methods for their production; however, there is no disclosure whatever with respect to what mechanism causes plated resin molded articles having a very good plating layer to be obtained.

### Disclosure of the Invention

The present invention provides, by clarifying the mechanism operating when a plated resin molded article is obtained through the plating of metal on the surface of a resin molded article and by elaborating more restricted conditions on this basis, even more beautiful plated resin molded articles that exhibit an even higher plating strength.

The present inventors carried out research into the mechanism by which a strong and beautiful plating layer is formed in the absence of an etching with chromic acid in the case of the plated resin molded articles disclosed in JP A 2003-82138 and JP A 2003-166067, and as a result discovered for the first time that a strong and beautiful plating layer is formed by a composite mechanism including the (I) to (V) described below.
(I) The use of components (A) to (D) and optionally also component (E) causes the polyamide-type resin (sea) and the styrenic resin (island) to form a sea-island structure; the water-soluble substance (D) has a major role in the formation of the sea-island structure (or, the combination of components (D) and (E) participates synergistically).
(II) Contact with acid (excluding toxic acids such as chromic acid) during the plating process causes a portion of the polyamide-type resin phase (sea) in the sea-island structure to form a swollen layer.
(III) The known catalyst baths used in the plating process infiltrate into the swollen layer and deposit catalyst therein (in this case, the catalyst bath undergoes a deeper infiltration than in the absence of the swollen layer) .
(IV) The plating metal, upon its infiltration into the swollen layer, grows in a tree root-shaped manner nucleating on the deposited catalyst, thereby inducing strong bonding between the resin and the plating layer.
(V) The styrenic resin (island) is dispersed in the swollen layer and functions to restrain swelling and also functions to restrain the post-plating shrinkage of the swollen layer and thereby to inhibit destruction of the interface between the resin molded article and the plating layer.

The present inventors also discovered that the primary factors governing the composite mechanism including the preceding are conditions that play a part in the formation of the sea-island structure and the formation of the swollen layer. The present invention was achieved based on these discoveries.

The invention present provides a plated resin molded article, containing:
a resin molded article, the surface of which has not been subjected to a roughening treatment by chromic acid etching, and a metal plating layer formed on the surface of the resin molded article,
the resin composition containing:
   (A) 10 to 90 mass% matrix resin that has a water absorption (ISO62) after 24 hours in 23°C water of at least 0.6%,
   (B) 10 to 90 mass% styrenic resin that has a water absorption (ISO62) after 24 hours in 23°C water of less than 0.6%,
   (C) 0 to 40 mass% compatibilizer and
   (D) 0.01 to 20 parts by mass, to 100 parts by mass of the total of components (A) to (C), of a water-soluble substance that has a solubility (25°C) in water of 0.01 g/100 g to 10 g/100 g;
where in the plated resin molded article satisfies at least one of the following requirements (1) phase structure of resin molded article and (2) bonding state of resin molded article and metal plating layer, and does not exhibit any change in appearance upon visual inspection after the heat cycle tests defined below,
(1) phase structure of resin molded article:
   (1-1) a sea-island structure in which component (A) is the sea and component (B) is the island, or
   (1-2) a sea-island structure in which component (A) is the sea and component (B) is the island and in which islands (B-1) that are present in a sea-island structure containing components (A) to (C) and lacking component (D) are aggregated and larger domain islands (B-2) are thereby formed,
(2) bonding state of resin molded article and metal plating layer:
   in the vicinity of the surface of the resin molded article, the sea component (A) forms a swollen layer and the plating metal infiltrates into the swollen layer and substantially does not infiltrate into the island component (B),
      (Heat cycle test 1)
         a heat cycle test carried out for a total of 3 cycles using a plated resin molded article with dimensions of 100 mm length × 50 mm width × 3 mm thickness as a test piece and specifying 1 cycle as holding for 60 minutes at -30°C, holding for 30 minutes at room temperature (20°C), holding for 60 minutes at 75°C and holding for 30 minutes at room temperature (20°C),
      (Heat cycle test 2)
         a heat cycle test carried out for a total of 3 cycles using a plated resin molded article with dimensions of 100 mm length × 50 mm width × 3 mm thickness as a test piece and specifying 1 cycle as holding for 60 minutes at -30°C, holding for 30 minutes at room temperature (20°C), holding for 60 minutes at 85°C and holding for 30 minutes at room temperature (20°C).

In the present invention, the water absorption is an indicator of the degree of swelling wherein a higher water absorption is indicative of a higher degree of swelling.

### Brief Description of Drawings

Fig. 1 is a drawing that describes the plating formation mechanism in a plated resin molded article.
Fig. 2 is a TEM photograph that shows the phase structures of the plated resin molded article of Example 1.
Fig. 3 is a TEM photograph that shows the phase structure of the plated resin molded article of Example 3.

### Detailed Description of the Invention

Plated resin molded articles according to the present invention have a resin molded article containing a specific resin composition and have a metal plating layer formed on the surface of this resin molded article.

### <The resin composition and the resin molded article>

The matrix resin (A) has a water absorption of at least 0.6%, preferably 0.6 to 11%, more preferably 0.6 to 5%, and even more preferably 0.6 to 2.5%.

Preferred for the matrix resin (A) are, polyamide-type resins, acrylate salt-type resins, cellulose-type resins, vinyl alcohol-type resins and polyether-type resins, in each case that satisfy the saturated water absorption cited above, wherein polyamide-type resins and polyether-type resins are more preferred and polyamide-type resins are most preferred.

The polyamide-based resin is a polyamide-based resin which is formed by a diamine and a dicarboxylic acid and a copolymer thereof.

For example, there are mentioned a nylon 66, a polyhexamethylenesebacamide (nylon 6,10), a polyhexamethylenedodecanamide (nylon 6,12), a polydodecamethylenedodecanamide (nylon 12,12), a polymethaxylyleneadipamide (nylon MXD6), a polytetramethyleneadipamide (nylon 4,6), and a mixture thereof and a copolymer; copolymers such as a nylon 6/66, a nylon 66/6T in which a 6T component is 50% by mol or less (6T: polyhexamethyleneterephthalamide), a nylon 66/6I in which a 6I component is 50% by mol or less (6I: polyhexamethyleneisophthalamide), a nylon 6T/6I/66 and a nylon 6T/6I/610; copolymers such as a polyhexamethyleneterephthalamide (nylon 6T), a polyhexamethyleneisophthalamide (nylon 6I), a poly(2-methylpentamethylene)terephthalamide (nylon M5T), a poly(2-methylpentamethylene)isophthalamide (nylon M5I), a nylon 6T/6I and a nylon 6T/M5T. Additionally, a copolymer nylon such as an amorphous nylon may be used, and as the amorphous nylon, a polycondensate of terephthalic acid and trimethylhexamethylene diamine and the like may be proposed.

Further, the ring opening polymer of a cyclic lactam, a polycondensate of an amino carboxylic acid and a copolymer composed of these components, specifically, aliphatic polyamide resins such as a nylon 6, a poly(w-undecanamide) (nylon 11) and a poly(ω-dodecanamide) (nylon 12), and a copolymer thereof; a copolymer with a polyamide composed of a diamine and a dicarboxylic acid, specifically, a nylon 6T/6, a nylon 6T/11, a nylon 6T/12, a nylon 6T/6I/12, a nylon 6T/6I/610/12 and the like, and a mixture thereof can be included.

As the polyamide-based resin of component (A), a PA (nylon) 6, a PA (nylon) 66 and a PA (nylon) 6/66 are preferable among the above-mentioned polyamide resins.

Styrene-type resins of component (B) has a water absorption less than 0.6% and more preferably no greater than 0.4%.

The styrenic resin can be exemplified by polymers of styrene and polymers of styrene derivatives such as α-substituted styrene or ring-substituted styrene. Also included are copolymers composed mainly of these monomers and produced from them and a vinyl compound such as acrylonitrile, acrylic acid, and methacrylic acid and/or a conjugated diene compound such as butadiene or isoprene. Examples are polystyrene, impact-resistant polystyrene (HIPS) resin, acrylonitrile-butadiene-styrene copolymer (ABS) resin, acrylonitrile-styrene copolymer (AS resin), styrene-methacrylate copolymer (MS resin) and styrenebutadiene copolymer (SBS resin).

In addition, the polystyrenic resin encompasses styrenic copolymers in which a carboxyl-functional unsaturated compound has been copolymerized in order to improve the compatibility with the polyamide-type resin. A styrenic copolymer containing a copolymerized carboxyl-functional unsaturated compound is a copolymer obtained by the polymerization, in the presence of a rubbery polymer, of a carboxyl-functional unsaturated compound and possibly other monomer copolymerizable therewith.

Specific examples of this component are as follows:
1) graft polymers obtained by the polymerization, in the presence of a rubbery polymer in which a carboxyl-functional unsaturated compound has been copolymerized, of monomer whose essential component is aromatic vinyl monomer or monomer whose essential components are aromatic vinyl and a carboxyl-functional unsaturated compound;
2) graft copolymers obtained by the copolymerization, in the presence of a rubbery polymer, of monomer whose essential components are aromatic vinyl and a carboxyl-functional unsaturated compound;
3) the mixture of a rubber-reinforced styrenic resin in which a carboxyl-functional unsaturated compound is not copolymerized, with a copolymer of monomer whose essential components are a carboxyl-functional unsaturated compound and aromatic vinyl;
4) mixtures of a copolymer essentially of a carboxyl-functional unsaturated compound and aromatic vinyl, with the above-mentioned 1) or 2); and
5) mixtures of a copolymer whose essential component is aromatic vinyl, with the aforementioned 1) to 4).

The aromatic vinyl in the preceding 1) to 5) is preferably styrene, and acrylonitrile is preferred for the monomer that is copolymerized with the aromatic vinyl. The carboxyl-functional unsaturated compound is present in the styrenic resin at preferably 0.1 to 8 mass% and more preferably 0.2 to 7 mass%.

The compatibilizer designated as component (C) is used when the compatibility between components (A) and (B) is poor and functions to bring about uniform dispersion and mixing of the poorly compatible components (A) and (B). A sea-island structure in which component (A) is the sea and component (B) is microdispersed as islands (the first sea-island structure) is formed in the molded article of a mixture containing components (A) to (C).

The compatibilizer (C) can be exemplified by styrenic copolymers containing a copolymerized carboxyl-functional unsaturated compound.

A styrenic copolymer containing a copolymerized carboxyl-functional unsaturated compound is a copolymer obtained by the polymerization, in the presence of a rubbery polymer, of a carboxyl-functional unsaturated compound and possibly other monomer copolymerizable therewith, and the above-mentioned 1) to 5) can be used as the compatibilizer.

The proportions of components (A) to (C) in the resin composition are as follows.

The proportion of component (A) is preferably 10 to 90 mass%, more preferably 20 to 80 mass% and even more preferably 30 to 70 mass%.

The proportion of component (B) is preferably 10 to 90 mass%, more preferably 20 to 80 mass%, and even more preferably 30 to 70 mass%.

The proportion of component (C) is preferably 0 to 40 mass%, more preferably 1 to 20 mass%, and even more preferably 1 to 15 mass%.

Component (D), which is a water-soluble substance having a solubility (25°C) in water of 0.01 g/100 g to 10 g/100 g, modifies the first sea-island structure of the above-mentioned molded article containing components (A) to (C) .

Through the further introduction of component (D) in addition to components (A) to (C), the phase structure of the resin molded article assumes (1-1) a sea-island structure in which component (A) is the sea and component (B) is the island (the first sea-island structure is retained) or (1-2) a sea-island structure (the second sea-island structure) in which component (A) is the sea and component (B) is the island and in which the islands (B-1) that are present in a sea-island structure containing components (A) to (C) and lacking component (D) are aggregated and larger domain islands (B-2) are formed, thereby causing the appearance of mechanism (1). Which of these phase structures (1-1) and (1-2) is assumed changes with the proportion of component (D), and the object of the present invention is achieved by either phase structure.

The mechanism (I) is thought to be a mechanism in which, through the solubilization of component (D) into the component (A) phase as sea, the mobility is increased and the crystallization of component (A) is promoted, which results in the maintenance of the first sea-island structure or the formation of the second sea-island structure.

Pentaerythritol (7.2 g/100 g) and dipentaerythritol (not more than 0.1 g/100 g) are preferred for component (D).

The proportion of component (D) in the resin composition is preferably 0.01 to 20 parts by mass, more preferably 0.05 to 20 parts by mass and even more preferably 0.1 to 20 parts by mass, in each case to 100 parts by mass of the total of components (A) to (C).

The surfactant designated as component (E) is an optional component. It is thought that this surfactant, through its combination with component (D), functions to retain the first sea-island structure or to contribute to the appearance of the second sea-island structure and to thereby synergistically increase the adhesive strength of the plating layer.

The surfactant may be the surfactant (emulsifying agent) that remains in the resin from the surfactant employed when emulsion polymerization is used to produce the thermoplastic resin or may be specifically added when a production method is used that does not employ an emulsifying agent, for example, bulk polymerization.

In addition to the surfactant used in emulsion polymerization of the resin, the surfactant may be surfactant other than the surfactant used in the emulsion polymerization. The surfactant is preferably anionic surfactant, cationic surfactant, nonionic surfactant or amphoteric surfactant.

These surfactants can be exemplified as follows: the anionic surfactants such as a salt of an aliphatic acid, a salt of rosin acid, an alkyl sulfonate, an alkylbenzene sulfonate, an alkyldiphenyl ether sulfonate, a polyoxyethylenealkyl ether sulfonate, a diester salt of sulfosuccinic acid, an ester salt of α-olefin sulfonic acid or an α-olefin sulfonate; cationic surfactants such as a mono or dialkylamine or a polyoxyethylene adduct thereof or a mono or di-long chain alkyl quatery ammonium salt; nonionic surfactants such as an alkyl glucoside, a polyoxyethylenealkyl ether, a polyoxyethylenealkyl phenyl ether, sucrose ester of an aliphatic acid, sorbitan ester of an aliphatic acid, a polyoxyethylene sorbitan ester of an aliphatic acid, a polyoxyethylene ester of an aliphatic acid, a polyoxyethylene-propylene block copolymer, mono glyceride of an aliphatic acid or amine oxide; and amphoteric surfactants such as carbobetaine, sulfobetaine or hydroxysulfobetaine.

The proportion of component (E) in the resin composition is preferably 0.01 to 10 parts by mass, more preferably 0.01 to 5 parts by mass and even more preferably 0.01 to 2 parts by mass, in each case to 100 parts by mass of the total of components (A) to (C).

The (E)/(D) mass ratio between component (D) and component (E) in the resin composition is preferably 100/1 to 1/100, more preferably 50/1 to 1/50 and even more preferably 20/1 to 1/20.

The resin composition may contain, in correspondence to the application of the plated resin molded article and within a range in which the effects of the present invention are obtained, the various additives and fillers that are ordinarily added to resin molded article.

The resin molded article can be obtained using the resin composition described hereinabove by molding the resin composition into a desired shape in conformity to the application using known resin molding methods, such as, for example, injection molding.

### <Plated resin molded articles>

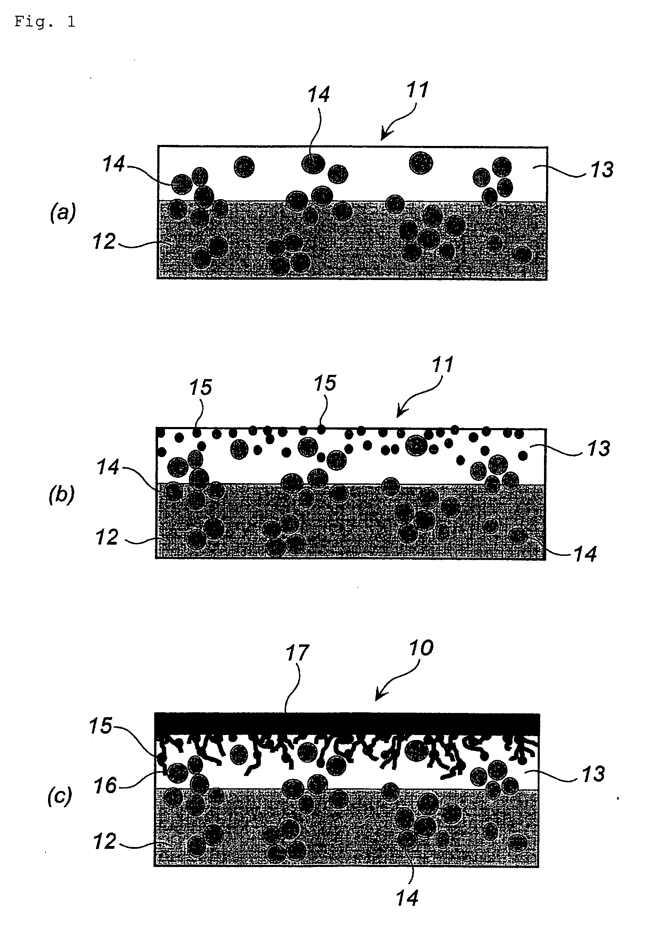

The individual steps in the production of plated resin molded articles according to the present invention are described hereinbelow using Fig. 1, while also clarifying the relationship to the mechanisms (I) to (V) cited above. Fig. 1 shows a conceptual relationship between the production steps and the mechanisms (I) to (V).

The plated resin molded article according to the present invention can be obtained by plating the surface of the resin molded article with metal by a known plating method, i.e., using an acid or base degreasing step (excluding, however, the known methods of treatment with chromic acid or potassium permanganate), a step in which treatment with a catalyst application bath is carried out, and an electroless plating step.

### (Molding of the resin molded article; mechanism (I))

The resin molded article containing components (A) to (D) is obtained by molding by a known method, for example, injection molding, into a desired shape adapted to the application. Due to the presence of component (D) or optionally components (D) and (E) in the resin molded article, the first sea-island structure is retained or the second sea-island structure is formed. These sea-island structures are also present in the final product.

The formation of the sea-island structure facilitates formation of the swollen layer (manifestation of mechanism (II)) in the sea (component (A)) at the surface of the resin molded article in the ensuing process and also facilitates an ensuing swelling inhibition function by the islands (component (B)) on the swollen layer (manifestation of mechanism (V)).

When the second sea-island structure has been formed, the area of the islands (B-2) are at least twice the area of the islands (B-1) upon comparison by TEM inspection.

### (The degreasing treatment and the step of contact treatment with, for example, acid; mechanism (II))

The degreasing treatment is carried out with an aqueous surfactant solution that contains base or acid. The present invention does not require an etching step with a heavy metal-containing acid, e.g., chromic acid, as a surface roughening treatment in order to increase the adhesive strength of the plating layer.

Mechanism (II) is generated by this degreasing treatment and contact treatment with, for example, acid, and, as shown in Fig. 1(a), within the component (A) phase (sea) 12, a swollen layer 13 is formed in the component (A) phase at the surface of the resin molded article 11 in which the sea-island structure has been formed. This in turn facilitates the generation of mechanism (III) in the ensuing step. The component (B) phase (island) 14 is present dispersed in both the phase 12 and the swollen layer 13. Here, swelling denotes a condition in which the volume has undergone an increase from the original volume regardless of the degree of the increase. In addition, the interface between the phase 12 and the swollen layer 13 need not necessarily assume the smooth, flat border shown in the figure.

The acid or base used in the degreasing treatment is preferably a low concentration acid or base, preferably less than 4 N, more preferably no more than 3.5 N, and even more preferably no more than 3.0 N.

The degreasing treatment can employ a procedure in which the resin molded article is immersed in the acid or base and can employ an immersion procedure at a bath temperature of 10 to 80°C for 0.5 to 20 minutes.

In addition to hydrochloric acid, phosphoric acid and sulfuric acid, the acid used can be selected from organic acids such as acetic acid, citric acid or formic acid. The base used can be selected from alkali metal hydroxides and alkaline-earth metal hydroxides such as sodium hydroxide, potassium hydroxide, calcium hydroxide or magnesium hydroxide, and from carbonates such as sodium carbonate or potassium carbonate.

Since the treatment in this step does not employ chromic acid or the like, the surface of the resin molded article 11 is not roughened as when an etching with chromic acid is carried out and the same surface state as when molded is retained.

### (The step of treating with the catalyst application bath is carried out; mechanism (III))

The degreasing treatment can be followed with, for example, a water rinse step, a step in which treatment with a catalyst application bath is carried out, a water rinse step, a step in which treatment with an activating bath is carried out (activation step), and a water rinse step. Treatment with the catalyst application bath and treatment with the activating bath can be carried out at the same time.

Mechanism (III) is generated by this treatment step, as shown in Fig. 1(b), and the catalyst bath infiltrates into the swollen layer 13 and catalyst (Sn, Pd) 15 is deposited therein, thereby facilitating the generation of mechanisms (IV) and (V) in the ensuing step. The infiltration depth by the catalyst bath in this case is deeper than in the absence of the swollen layer 13 and infiltration proceeds into the swollen layer to at least 10 nm from the surface of the resin molded article 11.

Treatment with the catalyst application bath involves, for example, immersion for about 1 to 5 minutes at room temperature in a 35% hydrochloric acid solution (10 to 20 mg/L) of tin chloride (20 to 40 g/L). Treatment with the activating bath involves immersion for 1 to 2 minutes at room temperature in a 35% hydrochloric acid solution (3 to 5 mg/L) of palladium chloride (0.1 to 0.3 g/L).

### (The electroless plating step; mechanisms (IV) and (V))

Electroless plating is then carried out. Mechanisms (IV) and (V) are generated by this electroless plating, as shown in Fig. 1(c).

That is, the plating metal 16, upon its infiltration within the swollen layer 13, grows in a tree root-shaped manner nucleating on the deposited catalyst 15, thereby inducing strong bonding between the resin molded article 11 and the plating layer 17.

At this point, the component (B) phase (island) 14, being dispersed in the component (A) phase (sea) 12 and in the swollen layer 13, functions to restrain swelling and, by restraining post-plating shrinkage of the swollen layer 13, functions to inhibit destruction of the interface between the resin molded article 11 and the metal plating layer 17. When the component (B) phase (islands) 14 is not present, the interface is destroyed, producing a phenomenon in which the plating layer lifts from the surface of the resin molded article 11.

As a result, a plated resin molded article 10 is obtained that has a strong and aesthetically pleasing metal plating layer 17 on the surface of the resin molded article 11. Furthermore, the plating metal substantially does not infiltrate into the component (B) phase (island) 14.

The electroless plating step can use a plating bath that contains, for example, nickel, copper, cobalt, a nickel-cobalt alloy or gold, and a reducing agent such as formalin or a hypophosphite salt. The pH and temperature of the plating bath are selected in correspondence to the type of plating bath used.

In those cases in which an additional plating treatment is carried out after the electroless plating, after activation with acid or base a multilayer electrolytic plating step can also be added using one or more known plating metals, such as copper, in correspondence to the use and/or function.

Upon visual inspection after the specified heat cycle testing, the plated resin molded article according to the present invention is completely free of alterations in appearance such as the generation of wrinkles, cracks or blistering in the plating layer.

The maximum value of the adhesive strength (JIS H 8630) between the resin molded article and the metal plating layer in the plated resin molded article according to the present invention can be brought to 10 kPa or more.

The shape, type and thickness of the metal plating layer, and so forth of the plated resin molded article according to the present invention can be selected as appropriate for the particular application. While the plated resin molded article according to the present invention can be used in a variety of applications, it is particularly well adapted for application as an automotive part, such as bumpers, emblems, hub caps, interior components or exterior components.

The plated resin molded article according to the present invention, notwithstanding the fact that it is not subjected to surface roughening by an etching with chromic acid, presents a beautiful appearance and exhibits an extremely high adhesive strength between the resin molded article and the plating layer.

### Examples

Examples of the present invention are described in the following Examples. While examples of the present invention are described in these Examples, these do not limit the present invention.

The test methods and the individual components used in Examples and Comparative Examples are described below.

### (Adherence test of plating layer)

The adhering strength (the highest value) between the thermoplastic resin molded article and a metal plating layer was measured according to the adherence test method described in appendix 6 in JIS H8630 using the plated resin molded articles obtained in the following Examples and Comparative Examples.

### (Components of the resin composition)

### Component (A)

(A): Polyamide 6, Ube Nylon 6 1013B, manufactured by UBE Industries, Ltd., water absorption=1.8%

### Component (B)

ABS resin (45 mass% styrene, 15 mass% acrylonitrile, 40 mass% rubber; water absorption=0.2%)

### Component (C)

### (C-1): acid-modified ABS resin (42 mass% styrene, 16 mass% acrylonitrile, 40 mass% rubber, 2 mass% methacrylic acid)

### (C-2): acid-modified ABS resin (40 mass% styrene, 14 mass% acrylonitrile, 40% mass rubber, 6 mass% methacrylic acid)

### Component (D)

dipentaerythritol (herein after referred to as DPER, from Koei Chemical Company, Ltd.)

### Component (E)

### sodium α-olefinsulfonate PB800 (Lion Corporation)

Examples 1 and 2 and Comparative Examples 1 and 2

### (i) Molding of the resin molded article

Using the components shown in Table 1, 100 × 50 × 3 mm resin molded articles were obtained by injection molding (cylinder temperature=240°C, mold temperature=60°C). These resin molded articles were used to obtain plated resin molded articles according to the following steps.

### (ii) The degreasing step and the contact-treatment step with an acid

The resin molded article was immersed in a 50 g/L aqueous solution (a solution temperature of 40°C) of ACECLEAN A-220 (manufactured by OKUNO Pharmaceuticals Co., Ltd.) for 20 minutes, and then immersed in 100 mL 1.0 N hydrochloric acid (liquid temperature=40°C) for 5 minutes. (Fig. 1(a))

### (iii) Catalyst imparting step

The resin molded article was immersed in a mix aqueous solution (a solution temperature of 25°C) of 150 ml/L of 35% by weight of hydrochloric acid and 40 ml/L aqueous solution of Catalyst C (manufactured by OKUNO Pharmaceuticals Co., Ltd.) for 3 minutes. (Fig. 1(b))

### (iv) The first activation step

The resin molded article was immersed in 100 ml/L aqueous solution (a solution temperature of 40°C) of 98% by weight of sulfuric acid for 3 minutes.

### (v) The second activation step

The test piece was immersed in 15 g/L aqueous solution (a solution temperature of 40°C) of sodium hydroxide for 2 minutes.

### (vi) Electroless plating step of nickel

The resin molded article was immersed in a mix aqueous solution (a solution temperature of 40°C) of 150 ml/L of Chemical Nickel HR-TA (manufactured by OKUNO Pharmaceuticals Co., Ltd.) and 150 ml/L of Chemical Nickel HR-TB (manufactured by OKUNO Pharmaceuticals Co., Ltd.) for 5 minutes. (Fig. 1(c))

### (vii) Acid activation step

The test piece was immersed in 100 g/L aqueous solution (a solution temperature of 25°C) of TOP SAN (manufactured by OKUNO Pharmaceuticals Co., Ltd.) for one minute.

### (viii) Electroplate step of copper

The resin molded article was immersed in a plating bath having the under-mentioned composition (a solution temperature of 25°C), and electroplate was carried out for 120 minutes.

### (Composition of plating bath)

Copper sulfate (CuSO₄ · 5H₂O): 200 g/L
Sulfuric acid (98%): 50 g/L
Chlorine ion (C1⁻): 5 ml/L
TOP LUCINA 2000 MU (manufactured by OKUNO Pharmaceuticals Co., Ltd.): 5 ml/L
TOP LUCINA 2000 A (manufactured by OKUNO Pharmaceuticals Co., Ltd.): 0.5 ml/L

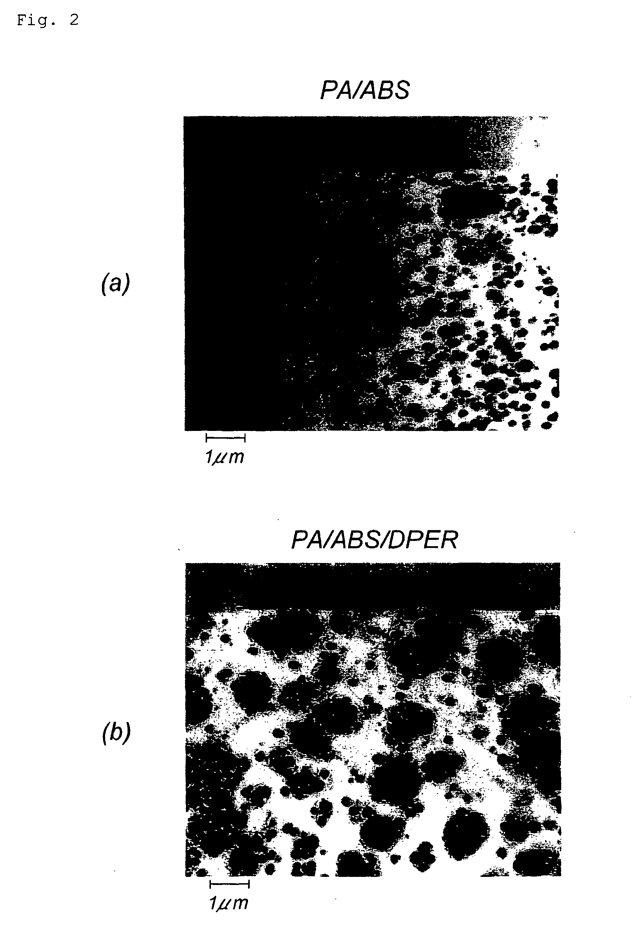

The phase structure (TEM photographs) of the plated resin molded article is shown in Fig. 2. In Fig. 2(a) (Comparative Example 1), the first sea-island structure has been formed because component (D) is not present, while in Fig. 2(b) (Example 1), the second sea-island structure has been formed because component (D) is present.

**Table 1**

| | Example 1 | Comparative Example 1 | Example 2 | Comparative Example 2 |
|---|---|---|---|---|
| (A) PA (water absorption = 1.8%) | 60 | 60 | 60 | 60 |
| B) ABS (water absorption = 0,2% | 30 | 30 | 30 | 30 |
| (C-1) Acid-modified ABS | - | - | 10 | 10 |
| (C-2) Acid-modified ABS | 10 | 10 | - | - |
| (D) DPER | 10 | - | 10 | - |
| (E) PB800 | - | - | 2 | - |
| Appearance after heat cycle test 1 | Good | blistering occurred | Good | blistering occurred |
| Appearance after heat cycle test 2 | Good | blistering occurred | Good | blistering occurred |
| Adhesive strength (kPa) | 150 | 5 | 200 | 5 |

As is clear from a comparison of Example 1 and Comparative Examples 1 and 2 in Table 1, molded articles having a strong plating layer with an aesthetically pleasing appearance could be obtained by a combination of components (A) and (B) having water absorptions in the prescribed ranges and by the use as component (D) of a water-soluble substance with a water solubility in the prescribed range.

Moreover, as is demonstrated by a comparison of Example 2 with Example 1, a molded article having an even stronger plating layer with an aesthetically pleasing appearance could be obtained by a combination of components (D) and (E) at the specified ratio.

### Example 3

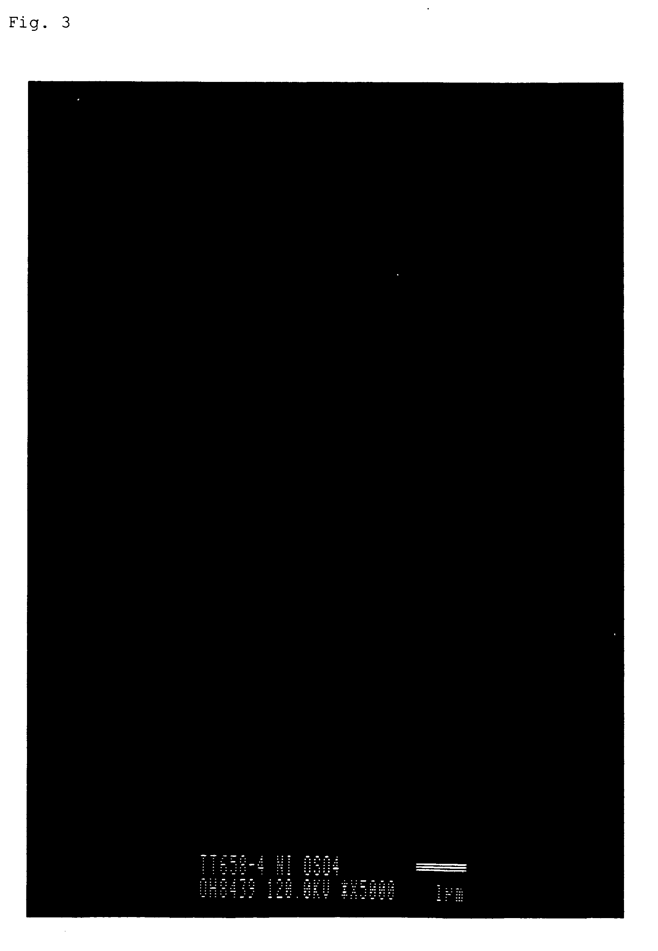

A plated resin molded article was obtained in the same way as Example 1, except for that the proportion of the DPER of component (D) was made 5 parts by mass to the total of components (A) to (C). The phase structure (TEM photograph) of the plated resin molded article is shown in Fig. 3. The first sea-island structure was retained intact because the proportion of component (D) was less than in Example 1.

## Claims

1. A plated resin molded article, comprising:
a resin molded article, the surface of which has not been subjected to a roughening treatment by chromic acid etching, and a metal plating layer formed on the surface of the resin molded article,
the resin composition comprising
(A) 10 to 90 mass% matrix resin that has a water absorption (ISO62) after 24 hours in 23°C water of at least 0.6%,
(B) 10 to 90 mass% styrenic resin that has a water absorption (ISO62) after 24 hours in 23°C water of less than 0.6%,
(C) 0 to 40 mass% compatibilizer and
(D) 0.01 to 20 parts by mass, to 100 parts by mass of the total of components (A) to (C), of a water-soluble substance that has a solubility (25°C) in water of 0.01 g/100 g to 10 g/100 g;
wherein the plated resin molded article satisfies at least one of the following requirements (1) phase structure of resin molded article and (2) bonding state of resin molded article and metal plating layer, and does not exhibit any change in appearance upon visual inspection after the heat cycle tests defined below,
(1) phase structure of resin molded article:
(1-1) a sea-island structure in which component (A) is the sea and component (B) is the island, or
(1-2) a sea-island structure in which component (A) is the sea and component (B) is the island and in which islands (B-1) that are present in a sea-island structure containing components (A) to (C) and lacking component (D) are aggregated and larger domain islands (B-2) are thereby formed,
(2) bonding state of resin molded article and metal plating layer:
in the vicinity of the surface of the resin molded article, the sea component (A) forms a swollen layer and the plating metal infiltrates into the swollen layer and substantially does not infiltrate into the island component (B),
(Heat cycle test 1)
a heat cycle test carried out for a total of 3 cycles using a plated resin molded article with dimensions of 100 mm length × 50 mm width × 3 mm thickness as a test piece and specifying 1 cycle as holding for 60 minutes at -30°C, holding for 30 minutes at room temperature (20°C), holding for 60 minutes at 75°C and holding for 30 minutes at room temperature (20°C),
(Heat cycle test 2)
a heat cycle test carried out for a total of 3 cycles using a plated resin molded article with dimensions of 100 mm length × 50 mm width × 3 mm thickness as a test piece and specifying 1 cycle as holding for 60 minutes at -30°C, holding for 30 minutes at room temperature (20°C), holding for 60 minutes at 85°C and holding for 30 minutes at room temperature (20°C).

2. The plated resin molded article according to claim 1, further containing a surfactant (E) in the above-mentioned resin composition, wherein the (E)/(D) mass ratio between component (D) and component (E) is 100/1 to 1/100.

3. The plated resin molded article according to claim 1 or 2, wherein, in (1-2) of requirement (1), the surface area of the island (B-2) is at least twice the surface area of the island (B-1) in a comparison thereof by observation by a transmission electron microscope (TEM).

4. The plated resin molded article according to any of claims 1 to 3, wherein, in requirement (2), the plating metal infiltrates into the swollen layer to at least 10 nm from the surface of the resin molded article.

5. The plated resin molded article according to any of claims 1 to 4, wherein the maximum value of the adhesive strength (JIS H 8630) between the resin molded article and the metal plating layer of the plated resin molded article is at least 10 kPa.

6. The plated resin molded article according to any of claims 1 to 5, applied as an automotive component.
